# EUROPÄISCHE PATENTSCHRIFT

(11) **EP 2 614 927 B1**
(45) Veröffentlichungstag und Bekanntmachung des Hinweises auf die Patenterteilung: **26.11.2014**
(21) Anmeldenummer: 13150607.3
(22) Anmeldetag: 09.01.2013
(51) Int. Cl.: B25B 27/06

(54) **Montage- und Demontagewerkzeug**
Assembly and disassembly tool
Outil de montage et de démontage

(30) Priorität: 12.01.2012 DE 102012200379
(43) Veröffentlichungstag der Anmeldung: 17.07.2013
(73) Patentinhaber: Aktiebolaget SKF, 41550 Göteborg (SE)
(72) Erfinder: Schweitzer, Ferdinand, 3352 St. Peter in der Au (AT)
(74) Vertreter: Schonecke, Mitja

(56) Entgegenhaltungen:
- DE-A1- 19 547 773
- DE-U1-202009 017 627
- DE-U1-202010 002 521
- JP-A- 2001 277 148
- US-A- 2 779 089

## Beschreibung

Die Erfindung betrifft ein Montage- und Demontagewerkzeug zum Montieren und Demontieren eines Wälzkörpers in einen und aus einem Wälzlagerkäfig.

Es sind spezielle Wälzlager im Einsatz, insbesondere ausgebildet als Zylinderrollenlager, die einen Fensterkäfig aufweisen, in dem die Zylinderrollen in bekannter Weise angeordnet sind. Die Fenster des Käfigs sind dabei so ausgeführt, dass die Zylinderrollen aus einer Einheit, bestehend aus Lagerinnenring, Käfig und Zylinderrollen, nicht radial nach außen herausfallen können. Hierfür weisen die Käfigstege einen geringfügigen Hinterschnitt auf, der die Zylinderrollen am Herausfallen hindert. Solche Lager kommen beispielsweise bei Fahrmotoren in Schienenfahrzeugen zum Einsatz.

Insbesondere für den letztgenannten Anwendungsfall werden hochfeste Käfige benötigt, die aus einer Spezialbronze bestehen. Dies ist nötig, um die im Betrieb auftretenden Belastungen problemlos aushalten zu können.

Nachteilig ist bei derartigen Lagern, dass es infolge der hohen Festigkeit des Käfigs nicht in einfacher Weise möglich ist, die Einheit, bestehend aus Lagerinnenring, Käfig und Zylinderrollen, zu demontieren, solange der Innenring nicht entfernt worden ist; dann erst können die Zylinderrollen radial nach innen aus dem Käfig hinterschnittsfrei entnommen werden. Entsprechend ist auch die erneute Montage einer Zylinderrolle in die Käfigtasche problematisch.

Während beispielsweise beim Einsatz von Kunststoff als Käfigwerkstoff auch bei einem geringfügigen Hinterschnitt der Käfigstege die Zylinderrollen durch radiales Herausziehen entfernt und das Lager so - beispielsweise für Inspektionszwecke - demontiert werden kann, ist dies in dieser Weise nicht mehr möglich, wenn der Käfig aus dem genannten hochfesten Werkstoff besteht.

Es hat sich vielmehr gezeigt, dass es selbst bei optimalen Fertigungstoleranzen bedingt durch die Bauart des Massivkäfigs und dessen Herstellung aus hochfester Bronze nicht möglich ist, eine zerstörungsfreie Demontage und Wiedermontage des Lagers zu ermöglichen.

Dieses Problem ist besonders störend, wenn eine Lagerinspektion, -wartung bzw. - reparatur im mobilen Einsatz vor Ort erfolgen soll.

Aus der JP 2001 277 148 A ist ein Werkzeug der eingangs genannten Art bekannt. Hier ist ein zangenartig ausgebildetes Maul vorgesehen, das mit einer Schraube festgeklemmt werden kann, um einen Bolzen bzw. einen Nagel zu fassen und herausziehen zu können. Andere Lösungen zeigen die DE 20 2009 017 627 U1, die DE 195 47 773 A1, die US 2 779 089 A und die DE 20 2010 002 521 U1.

Der Erfindung liegt die **Aufgabe** zugrunde, ein Montage- und Demontagewerkzeug für ein Wälzlager vorzuschlagen, das auch bei hochfesten Käfigwerkstoffen das Demontieren eines Wälzkörpers aus dem Wälzlagerkäfig in einfacher Weise zulässt sowie das anschließende erneute Montieren des Wälzkörpers. Dabei soll vor allem ein mobiler Einsatz möglich sein, was es erfordert, dass das Werkzeug einfach aufgebaut ist und sich ohne weitere zusätzliche Komponenten einsetzen lässt.

Diese Aufgabe wird durch die Erfindung gelöst. Das Montage- und Demontagewerkzeug umfasst:
- ein Greifelement, das einen Grundkörper und ein am Grundkörper angeordnetes klemmbares Maul aufweist, wobei zum Klemmen des Mauls mindestens eine Schraube in einer in den Grundkörper eingearbeiteten Gewindebohrung eingeschraubt ist, wobei durch Anziehen der Schraube mindestens zwei zusammenwirkende Teile des Mauls zusammenspannbar sind,
- eine am Grundkörper des Greifelements befestigte Stange, auf der ein Schlaggewicht angeordnet ist, das entlang der Längsachse der Stange verschieblich angeordnet ist, und
- einen Anschlag für das Schlaggewicht, wobei der Anschlag an einem vom Greifelement beabstandeten Ort fest auf der Stange angeordnet ist, dadurch gekennzeichnet, dass
das Maul durch zwei Platten gebildet wird, die an voneinander abgewandten Endseiten des Grundkörpers angeschraubt oder anschraubbar sind.

Dabei kann eine das Maul bildende Platte durch die zum Spannen des Mauls vorgesehene Schraube lösbar mit dem Grundkörper verbunden sein, wobei die Schraube in einem von der Stange abgewandten Endbereich am Grundkörper angeordnet ist.

Die zum Spannen des Mauls vorgesehene Schraube ist bevorzugt als Schraube mit einem Schraubenkopf mit Innensechskant (Inbusschraube) ausgebildet.

Die lösbare Platte des Mauls kann weiterhin eine Ausnehmung aufweisen, in die ein Abstandshalter eingreifen kann, der einen Abstand zwischen einer der Endseiten des Grundkörpers und der Platte des Mauls hält. Hiermit kann auch beim Spannen eines Wälzkörpers die Parallelität der beiden Platten gewährleistet werden, die zusammen das Maul bilden. Der Abstandshalter kann durch einen Gewindestift gebildet werden, der in eine in den Grundkörper eingearbeitete Gewindebohrung eingeschraubt ist.

Die andere das Maul bildende Platte kann durch zwei Schrauben fest mit dem Grundkörper verschraubt sein.

Die das Maul bildenden Platten können an dem von der Stange abgewandten Ende vorspringende Greifabschnitte aufweisen.

Die Stange kann zumindest an einem Ende einen Gewindeabschnitt aufweisen, der in eine Gewindebohrung im Grundkörper eingeschraubt ist. Hiermit wird die Stange mit dem Grundkörper bzw. dem Greifelement fest verbunden.

Das Schlaggewicht ist bevorzugt als zylindrischer Körper ausgebildet, der mit einer Zentralbohrung auf der Stange angeordnet ist.

Gemäß dem vorgeschlagenen Werkzeug wird mittels des Greifelements nach Art einer glatten Parallelzange der zu demontierende bzw. zu montierende Wälzkörper, insbesondere die Zylinderrolle, geklemmt und dann - mittels des Schlaggewichts - schlagartig durch Ausführung von zumeist ein oder zwei Schlägen aus der Aufnahmetasche des Käfigs herausgezogen. Die einzelnen Wälzkörper werden dann nach und nach durch Wiederholen des Vorgangs für alle Wälzkörper aus dem Käfig entfernt.

Somit wird eine zerstörungsfreie Demontage aller Wälzkörper mittels des vorgeschlagenen Werkzeugs innerhalb weniger Minuten möglich, ohne dass es irgendwelche zusätzliche Komponenten oder Vorrichtungen bedarf.

Sehr vorteilhaft ist es dabei, dass die Kontaktflächen des Mauls, die den Wälzkörper greifen, möglichst glatt und eben sind, damit keine Beschädigungen der Wälzkörper an deren Stirnseiten auftreten. Weiterhin sollte die Kontaktfläche zwischen Wälzkörper und Spannfläche des Mauls möglichst groß werden, um möglichst hohe Reibkräfte übertragen zu können.

Das vorgeschlagene Werkzeug ist relativ klein und kann somit jederzeit vor Ort eingesetzt werden, um eine zerstörungsfreie Inspektion eines Wälzlagers, insbesondere eines Zylinderrollenlagers, zu ermöglichen.

Das Werkzeug kann analog genutzt werden, um einen demontierten Wälzkörper wieder in den Käfig zu montieren. Hierzu wird der Wälzkörper mit dem Greifelement gespannt und in das Aufnahmefenster des Käfigs "eingeschlagen", wofür wiederum das Schlaggewicht dient.

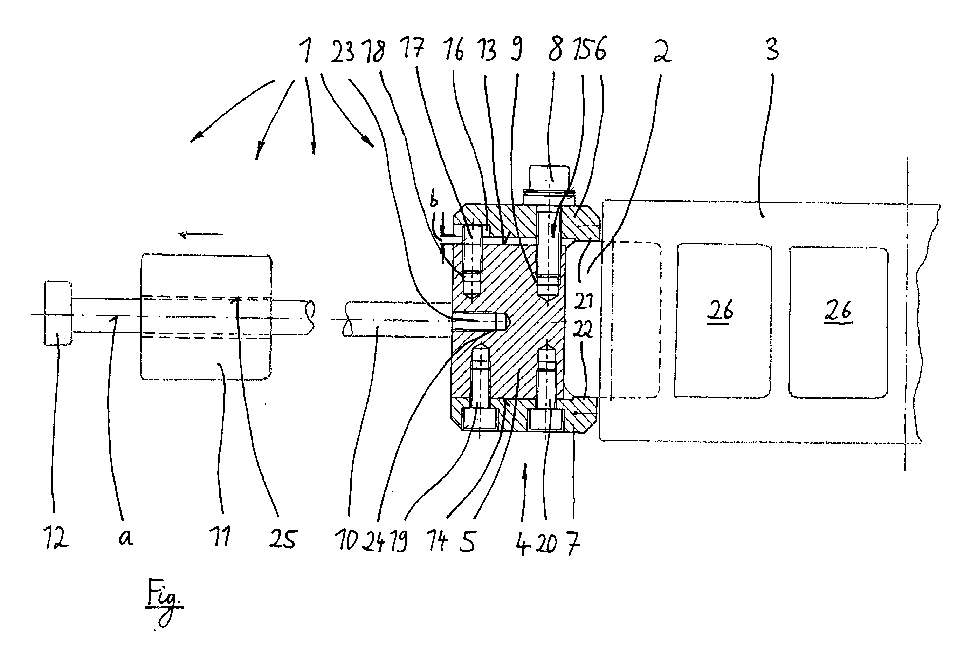

In der Zeichnung ist ein Ausführungsbeispiel der Erfindung dargestellt. Die einzige Figur zeigt das erfindungsgemäße Montage- und Demontagewerkzeug gemäß einer möglichen Ausgestaltung, wobei der Demontagevorgang einer Zylinderrolle aus einem Käfig dargestellt ist.

In der Figur ist ein Wälzlagerkäfig 3 eines nicht weiter dargestellten Zylinderrollenlagers zu sehen, der eine Anzahl Aufnahmetaschen 26 aufweist, in denen Wälzkörper 2 in Form von Zylinderrollen angeordnet sind. Vorliegend ist - was nicht näher zu sehen ist - der Wälzlagerkäfig 3 auf dem Lagerinnenring montiert, so dass eine einfache Herausnahme der Zylinderrollen 2 radial nach innen nicht möglich ist. Vielmehr sollen die Zylinderrollen 2 bei montiertem Innenring herausgenommen werden.

Hierfür ist das erfindungsgemäße Montage- und Demontagewerkzeug 1 vorgesehen, das im Wesentlichen aus drei Hauptkomponenten besteht: aus einem Greifelement 4, aus einer Stange 10 und einem auf der Stange 10 verschieblich angeordnetem Schlaggewicht 11.

Das Greifelement 4 hat einen blockförmigen Grundkörper 5, wobei an zwei voneinander weg gewandten Endseiten 13 und 14 zwei Platten 6 und 7 angeordnet sind, die zusammen ein Maul bilden, das - wie dargestellt - die Zylinderrolle 2 an ihren Stirnseiten spannen kann, und zwar lediglich an dem Bereich, der bei in den Käfig 3 montierter Zylinderrolle 2 aus der Käfigkontur herausragt.

Die eine untere Platte 7 ist als feste Platte am Grundkörper 5 fixiert. Hierfiir sind zwei Schrauben 19 und 20 vorgesehen, die die Platte 7 am Grundkörper 5 festlegen.

Die andere obere Platte 6 ist indes als lösbare Platte ausgebildet, d. h. sie kann zum Lösen der Klemmung der Zylinderrolle 2 vom Grundkörper 5 gelöst werden; zum Klemmen der Zylinderrolle 2 wird die Platte 6 indes am Grundkörper 5 verschraubt. Hierzu ist eine als Inbusschraube ausgebildete Schraube 8 vorgesehen, die in eine Gewindebohrung 9 im Grundköper 5 eingeschraubt werden kann. Die Schraube 8 ist dabei in einem Endbereich 15 des Grundkörpers 5 angeordnet.

Damit bei gegebener Klemmweite (entsprechend der Länge der Zylinderrolle 2) die beiden Platten 6 und 7 möglichst parallel bleiben, ist in die Platte 6 eine Ausnehmung 16 eingearbeitet. Ein Abstandshalter 17 in Form eines Gewindestifts ist in eine Gewindebohrung 18 im Grundkörper 5 eingeschraubt und zwar genau so weit, dass nach Anzug der Schraube 8 und der Klemmung der Zylinderrolle 2 die beiden Platten 6, 7 zueinander parallel verlaufen. Demgemäß wird durch den Abstandshalter 17 der richtige Abstand b eingestellt, um dies sicherzustellen.

Eine zuverlässige Klemmung der Zylinderrolle 2 wird durch hervorspringende Greifabschnitte 21 und 22 an den Platten 6, 7 sichergestellt, die glatt (riffelfrei) ausgebildet sind, um die Zylinderrollen in ihrem stirnseitigen Bereich bei der Demontage und Montage nicht zu beschädigen.

Eine weitere Gewindebohrung 24 im Grundkörper 5 dient dazu, den Gewindeabschnitt 23 aufzunehmen, der am einen Ende der Stange 10 eingeschnitten ist. Demgemäß kann die Stange 10 lösbar am Greifelement 4 befestigt werden.

Am anderen Ende der Stange 10 ist ein Anschlag 12 fixiert, der eine Anschlagsfläche für das Schlaggewicht 11 bildet. Das Schlaggewicht 11 ist als Zylinder ausgeführt und kann mit seiner Zentralbohrung 25 entlang der Längsachse a der Stange 10 in Richtung des Pfeils verschoben werden.

Zur Demontage wird das Werkzeug 1 wie dargestellt an der Zylinderrolle 2 angelegt und die Schraube 8 festgezogen; die Zylinderrolle ist damit fest geklemmt.

Dann wird das Schlaggewicht 11 ein oder zwei Mal fest gegen den Anschlag 12 geschlagen. Durch den Kraftstoß wird die Zylinderrolle 2 trotz leichtem Hinterschnitt und trotz der hohen Käfigfestigkeit aus der Aufnahmetasche 26 herausgezogen. Der Vorgang wird sooft wiederholt, bis alle Wälzkörper 2 aus dem Käfig 3 entfernt sind.

Der Montagevorgang nach erfolgter Inspektion findet in umgekehrter Weise statt. Demgemäß wird die geklemmte Zylinderrolle 2 wiederum in der erläuterten Weise geklemmt, an der Aufnahmetasche 26 angesetzt und mittels des Schlaggewichts 12 - jetzt entgegen der eingetragenen Pfeilrichtung - wieder in den Käfig montiert, d. h. "eingeschlagen".

### Bezugszeichenliste

- 1: Montage- und Demontagewerkzeug
- 2: Wälzkörper
- 3: Wälzlagerkäfig
- 4: Greifelement
- 5: Grundkörper
- 6, 7: Maul
- 6: lösbare Platte
- 7: feste Platte
- 8: Schraube (Inbusschraube)
- 9: Gewindebohrung
- 10: Stange
- 11: Schlaggewicht
- 12: Anschlag
- 13: Endseite
- 14: Endseite
- 15: Endbereich
- 16: Ausnehmung
- 17: Abstandshalter
- 18: Gewindebohrung
- 19: Schraube
- 20: Schraube
- 21: Greifabschnitt
- 22: Greifabschnitt
- 23: Gewindeabschnitt
- 24: Gewindebohrung
- 25: Zentralbohrung
- 26: Aufnahmetasche
- a: Längsachse
- b: Abstand

## Patentansprüche

1. Montage- und Demontagewerkzeug (1) zum Montieren und Demontieren eines Wälzkörpers (2) in einen und aus einem Wälzlagerkäfig (3), umfassend:
- ein Greifelement (4), das einen Grundkörper (5) und ein am Grundkörper (5) angeordnetes klemmbares Maul (6, 7) aufweist, wobei zum Klemmen des Mauls (6, 7) mindestens eine Schraube (8) in einer in den Grundkörper (5) eingearbeiteten Gewindebohrung (9) eingeschraubt ist, wobei durch Anziehen der Schraube (8) mindestens zwei zusammenwirkende Teile des Mauls (6, 7) zusammenspannbar sind,
- eine am Grundkörper (5) des Greifelements (4) befestigte Stange (10), auf der ein Schlaggewicht (11) angeordnet ist, das entlang der Längsachse (a) der Stange (10) verschieblich angeordnet ist, und
- einen Anschlag (12) für das Schlaggewicht (11), wobei der Anschlag (12) an einem vom Greifelement (4) beabstandeten Ort fest auf der Stange (10) angeordnet ist, **dadurch gekennzeichnet, dass**
das Maul (6, 7) durch zwei Platten gebildet wird, die an voneinander abgewandten Endseiten (13, 14) des Grundkörpers (5) angeschraubt oder anschraubbar sind.

2. Montage- und Demontagewerkzeug nach Anspruch 1, **dadurch gekennzeichnet, dass** eine das Maul (6, 7) bildende Platte (6) durch die zum Spannen des Mauls (6, 7) vorgesehene Schraube (8) lösbar mit dem Grundkörper (5) verbunden ist, wobei die Schraube (8) in einem von der Stange (10) abgewandten Endbereich (15) am Grundkörper (5) angeordnet ist.

3. Montage- und Demontagewerkzeug nach Anspruch 1 oder 2, **dadurch gekennzeichnet, dass** die zum Spannen des Mauls (6, 7) vorgesehene Schraube (8) als Schraube mit einem Schraubenkopf mit Innensechskant (Inbusschraube) ausgebildet ist.

4. Montage- und Demontagewerkzeug nach Anspruch 2 oder 3, **dadurch gekennzeichnet, dass** die lösbare Platte (6) des Mauls (6, 7) eine Ausnehmung (16) aufweist, in die ein Abstandshalter (17) eingreifen kann, der einen Abstand (b) zwischen einer der Endseiten (13) des Grundkörpers (5) und der Platte (6) des Mauls (6, 7) hält.

5. Montage- und Demontagewerkzeug nach Anspruch 4, **dadurch gekennzeichnet, dass** der Abstandshalter (17) durch einen Gewindestift gebildet wird, der in eine in den Grundkörper (5) eingearbeitete Gewindebohrung (18) eingeschraubt ist.

6. Montage- und Demontagewerkzeug nach einem der Ansprüche 3 bis 5, **dadurch gekennzeichnet, dass** eine das Maul (6, 7) bildende Platte (7) durch zwei Schrauben (19, 20) fest mit dem Grundkörper (5) verschraubt ist.

7. Montage- und Demontagewerkzeug nach einem der Ansprüche 3 bis 6, **dadurch gekennzeichnet, dass** die das Maul (6, 7) bildenden Platten an dem von der Stange (10) abgewandten Ende vorspringende Greifabschnitte (21, 22) aufweisen.

8. Montage- und Demontagewerkzeug nach einem der Ansprüche 1 bis 7, **dadurch gekennzeichnet, dass** die Stange (10) zumindest an einem Ende einen Gewindeabschnitt (23) aufweist, der in eine Gewindebohrung (24) im Grundkörper (5) eingeschraubt ist.

9. Montage- und Demontagewerkzeug nach einem der Ansprüche 1 bis 8, **dadurch gekennzeichnet, dass** das Schlaggewicht (11) als zylindrischer Körper ausgebildet ist, der mit einer Zentralbohrung (25) auf der Stange (10) angeordnet ist.

## Claims

1. Assembly and disassembly tool (1) for mounting and removing a rolling body (2) in and from a rolling bearing cage (3), comprising:
- a gripping element (4) which has a main body (5) and jaws (6, 7), which are arranged on the main body (5) and can be locked, wherein, to lock the jaws (6, 7), at least one screw (8) is screwed into a threaded hole (9) machined into the main body (5), wherein at least two interacting parts of the jaws (6, 7) can be clamped together by tightening the screw (8),
- a rod (10) which is secured on the main body (5) of the gripping element (4) and on which a sliding weight (11) is arranged in such a way that it can be moved along the longitudinal axis (a) of the rod (10), and
- a stop (12) for the sliding weight (11), wherein the stop (12) is arranged in a fixed location on the rod (10) spaced apart from the gripping element (4), **characterized in that**
the jaws (6, 7) are formed by two plates which are screwed or can be screwed to mutually remote end sides (13, 14) of the main body (5).

2. Assembly and disassembly tool according to Claim 1, **characterized in that** a plate (6) forming the jaws (6, 7) is connected releasably to the main body (5) by the screw (8) provided for clamping the jaws (6, 7), wherein the screw (8) is arranged on the main body (5) in an end region (15) remote from the rod (10).

3. Assembly and disassembly tool according to Claim 1 or 2, **characterized in that** the screw (8) which is provided for clamping the jaws (6, 7) is designed as a screw having a screw head with a hexagon socket (hexagon socket screw).

4. Assembly and disassembly tool according to Claim 2 or 3, **characterized in that** the releasable plate (6) of the jaws (6, 7) has a recess (16) in which a spacer (17) which maintains a distance (b) between one of the end sides (13) of the main body (5) and the plate (6) of the jaws (6, 7) can engage.

5. Assembly and disassembly tool according to Claim 4, **characterized in that** the spacer (17) is formed by a threaded pin which is screwed into a threaded hole (18) machined into the main body (5).

6. Assembly and disassembly tool according to one of Claims 3 to 5, **characterized in that** a plate (7) forming the jaws (6, 7) is screwed fixedly to the main body (5) by two screws (19, 20).

7. Assembly and disassembly tool according to one of Claims 3 to 6, **characterized in that** the plates forming the jaws (6, 7) have projecting gripping sections (21, 22) at the end facing away from the rod (10).

8. Assembly and disassembly tool according to one of Claims 1 to 7, **characterized in that** at least one end of the rod (10) has a threaded section (23) which is screwed into a threaded hole (24) in the main body (5).

9. Assembly and disassembly tool according to one of Claims 1 to 8, **characterized in that** the sliding weight (11) is designed as a cylindrical body which is arranged on the rod (10) by means of a central hole (25).

## Revendications

1. Outil de montage et de démontage (1) pour monter et démonter un corps de roulement (2) dans une cage de palier à roulement (3) et hors de celle-ci, comprenant :
- un élément de préhension (4) qui présente un corps de base (5) et un mors (6, 7) pouvant être serré, disposé sur le corps de base (5), au moins une vis (8) étant vissée dans un alésage fileté (9) pratiqué dans le corps de base (5) pour serrer le mors (6, 7), le vissage de la vis (8) permettant de serrer l'une contre l'autre au moins deux parties coopérantes du mors (6, 7),
- une tige (10) fixée au corps de base (5) de l'élément de préhension (4), sur laquelle est disposé un poids de percussion (11) qui est disposé de manière déplaçable le long de l'axe longitudinal (a) de la tige (10), et
- une butée (12) pour le poids de percussion (11), la butée (12) étant disposée fixement sur la tige (10) en un emplacement espacé de l'élément de préhension (4), **caractérisé en ce que**
le mors (6, 7) est formé par deux plaques qui sont ou peuvent être vissées à des côtés d'extrémité opposés l'un à l'autre (13, 14) du corps de base (5).

2. Outil de montage et de démontage selon la revendication 1, **caractérisé en ce qu'**une plaque (6) formant le mors (6, 7) est connectée de manière détachable au corps de base (5) par la vis (8) prévue pour serrer le mors (6, 7), la vis (8) étant disposée dans une région d'extrémité (15) opposée à la tige (10) au niveau du corps de base (5).

3. Outil de montage et de démontage selon la revendication 1 ou 2, **caractérisé en ce que** la vis (8) prévue pour serrer le mors (6, 7) est réalisée sous forme de vis avec une tête de vis à six pans creux (vis à tête creuse).

4. Outil de montage et de démontage selon la revendication 2 ou 3, **caractérisé en ce que** la plaque desserrable (6) du mors (6, 7) présente un évidement (16) dans lequel peut s'engager un élément d'espacement (17) qui maintient une distance (b) entre l'un des côtés d'extrémité (13) du corps de base (5) et la plaque (6) du mors (6, 7).

5. Outil de montage et de démontage selon la revendication 4, **caractérisé en ce que** l'élément d'espacement (17) est formé par une goupille filetée qui est vissée dans un alésage fileté (18) pratiqué dans le corps de base (5).

6. Outil de montage et de démontage selon l'une quelconque des revendications 3 à 5, **caractérisé en ce qu'**une plaque (7) formant le mors (6, 7) est vissée fixement au corps de base (5) par deux vis (19, 20).

7. Outil de montage et de démontage selon l'une quelconque des revendications 3 à 6, **caractérisé en ce que** les plaques formant le mors (6, 7) présentent des portions de préhension (21, 22) faisant saillie au niveau de l'extrémité opposée à la tige (10).

8. Outil de montage et de démontage selon l'une quelconque des revendications 1 à 7, **caractérisé en ce que** la tige (10) présente au moins au niveau d'une extrémité une portion filetée (23) qui est vissée dans un alésage fileté (24) dans le corps de base (5).

9. Outil de montage et de démontage selon l'une quelconque des revendications 1 à 8, **caractérisé en ce que** le poids de percussion (11) est réalisé sous forme de corps cylindrique qui est disposé avec un alésage central (25) sur la tige (10).
